## Europäisches Patentamt
## European Patent Office
## Office européen des brevets

(19)

(11) Publication number: **0 246 688**
A1

# EUROPEAN PATENT APPLICATION

(12)

(21) Application number: 87200825.5

(22) Date of filing: 04.05.87

(51) Int. Cl.³: **G 02 C 1/08**

(30) Priority: 21.05.86 IT 6039086 U

(43) Date of publication of application:
25.11.87 Bulletin 87/48

(84) Designated Contracting States:
AT BE CH DE ES FR GB GR LI LU NL SE

(71) Applicant: DI ESSE Srl Fabbrica Occhiali di R.A. De Silvestro & C.
Via Vittorio Veneto 1
I-32040 Vallesella di Cadore(BL)(IT)

(72) Inventor: De Silvestro, Romeo Antonio
Via Noai 9-Vallesella
I-32040 Domegge Di Cadore (BL)(IT)

(74) Representative: Petraz, Gilberto Luigi
G.L.P. S.a.s. di Gilberto Petraz P.le Cavedalis 6/2
I-33100 Udine(IT)

(54) Eye-glasses for a quick change of lenses.

(57) Eye-glasses for a quick change of lenses, which are suitable for the rapid fitting and replacement of lenses (24) and provide, at the point of attachment of the lateral legs, a separation of the lens-holder rim (11–111) and a guided connection between a protrusion (14) of the rim and an anchorage body (15–115) by means of a screw (16), a joint (10) being provided in cooperation with the anchorage body (15–115) so as to clamp the rim (11–111) of the lens resiliently about the lens itself (24), the resilient clamping action being provided by the thrust of the protrusion (14) towards the anchorage body (15–115), a resilient interspace (13) remaining between the protrusion (14) and the anchorage body (15–115), the resilient clamping system comprising a removable screw (16) which can adjust the resilient pressure and has a body comprising a smooth segment (19) coinciding at least partially with a spring (17).

fig.2

G02C

## "EYE-GLASSES FOR A QUICK CHANGE OF LENSES"

**********

This invention concerns eye-glasses suitable for the rapid fitting and replacement of the lenses by the user of the eye-glasses himself.

Normal eye-glasses at present do not permit the lenses to be fitted and replaced quickly.

Devices have been designed to enable the lenses to be fitted and replaced easily.

A first system provides for the holder rims to be separated and fastened together by screws at the points of union of the lateral legs of the eye-glasses. This system enables the lenses to be fitted and replaced by slackening off and then re-tightening the screws, a thing which a normal user cannot do.

Another system arranges for the bridge that lodges the user's nose to be split and for the two portions to be kept close to each other by a resiliently contrasting element. By overcoming the resilient resistance thus created in the peripheral rims of the lenses it is possible to replace the lenses.

However, this system entails the drawback that, when one lens is being replaced, the other one too tends to leave its rim.

There is also a complex mechanical system which enables the lenses to be replaced by rotation of the hinge on which the lateral leg swings. This system is more practical but is fragile and expensive and requires complex embodiment and maintenance.

US-A-3,473,869 discloses a pair of eye-glasses which provide, in coincidence with the attachment of the lateral leg, a separation of the lens holder section and a tubular guide sleeve between the two portions of the lens holder section; a screw is inserted into the sleeve and cooperates with a spring.

This embodiment leads to problems of reciprocal contact between the spring and the threaded part of the screw. Moreover, the inclusion of the cylindrical sleeve causes problems of contact between the two portions of the lens holder section and necessitates considerable separation of such portions so as to insert or remove the lens. Furthermore, the inclusion of three different parts leads to cost problems as regards procurement and assembly.

US-A-3,609,018 discloses a separation of the lens holder like that of US-A-3,473,869 but positioned at the outside edge of the holder and embodied with a pin having both its ends enlarged, the resilient element being a U-shaped spring. This system is simpler than the one described above but comprises a pin which cannot be replaced and an annoying extension consisting of the U-shaped spring.

US-A-4,360,252 too discloses the division of the lens holder and the restoration of connection thereof with a screw having one segment with a righthand thread and another segment with a lefthand thread.

US-A-3,902,796 discloses that the lens is secured by making use of the resilience belonging to the terminal segments of the lens holder.

FR-A-953.978 provides for the division of the lens holder and for freeing one portion thereof from the other when the lateral leg is fully closed, but this causes problems of retention of the lens in the long term.

So as to obviate the cited drawbacks and provide eye-glasses which enable a user to fit and replace the lenses easily, and so as to enable glass lenses to be fitted without any risk of splintering, and also so as to permit the clamping of the lenses to be adjusted as required, the present applicant has studied, tested and embodied the following invention.

According to the invention the rim that holds the lens is interrupted in a known manner at the point of union of the leg which is supported on the user's ear.

Continuity of the peripheral rim is restored by means of a screw and spring.

The screw serves to regulate the resilient resistance and also the peripheral pressure exerted on the lens.

The screw and spring are inserted into an appropriate guiding and masking lodgement which provides a retaining action.

Moreover, the end segment of the screw is threaded so as to cooperate with one of the two portions of the rim, whereas the remaining segment of the screw is not threaded.

In a variant the segment not threaded has a diameter smaller than the threaded segment so that, when the screw is inserted into the spring, the latter remains lodged on the screw even when the screw is not installed or is momentarily removed.

The invention is therefore embodied with eye-glasses for a quick change of lens, which are suitable for the rapid fitting and replacement of lenses and provide, at the point of attachment of the lateral legs, a separation of the lens-holder rim and a guided connection between a protrusion of the rim and an anchorage body by means of a screw, a joint being provided in cooperation with the anchorage body so as to clamp the rim of the lens resiliently about the lens itself, the resilient clamping action being provided by the thrust of the protrusion towards the anchorage body, a resilient interspace remaining between the protrusion and the anchorage body, the eye-glasses being characterized in that the resilient clamping system comprises a removable screw which can adjust the resilient pressure and has a body comprising a smooth segment coinciding at least partially with a spring.

The attached figures, which are given as a non-restrictive example, show the following:-

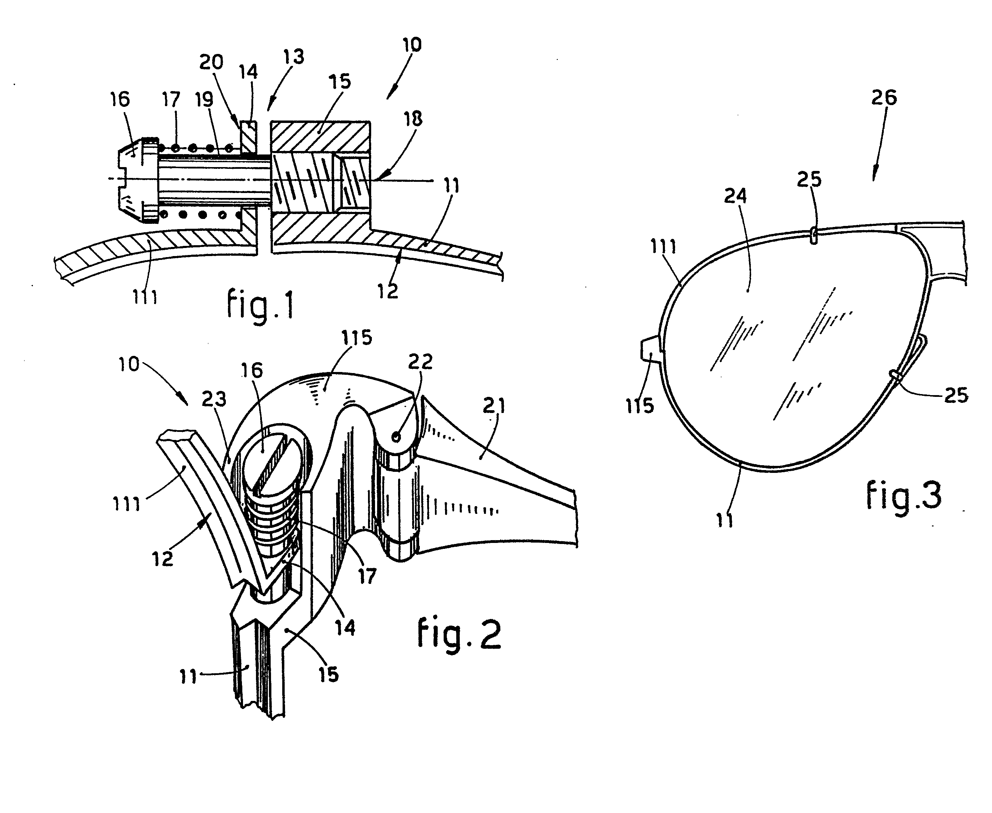

Fig.1    shows an embodiment according to the invention;

Fig.2    shows a variant according to the invention;

Fig.3    shows a portion of eye-glasses which have adopted the embodiment of Fig.2.

In the figures, eye-glasses 26 comprise a joint 10 with an interruption of a peripheral rim 11-111 of a lens 24 in correspondence with a body 15-115 that anchors a leg 21 of the eye-glasses, the leg being rotatable on a pivot 22 in this example.

The rim 11-111 comprises a groove 12 suitable to accommodate the lens 24. The interruption in the rim provides a gap 13 between the body 15 and a protrusion 14, this gap being advantageously capable of being varied resiliently.

The protrusion 14 is guided in a known manner by a screw 16, which is anchored in a threaded hole 18 in the body 15. In this case the screw 16 comprises a smooth portion 19 having a diameter smaller than that of its threaded portion.

The protrusion 14 is pressed resiliently towards the body 15 by a spring 17, which thrusts against the head of the screw 16 and against the protrusion 14.

The spring 17 is retained substantially on the non-threaded portion of the screw 16 owing to the non-threaded portion being stepped downwards in relation to the threaded portion and also owing to the respective dimensions of the screw 16 and spring 17. In fact, the spring 17 in this case has an inner diameter almost the same as, but greater than, the outer diameter of the screw 16.

This causes a resilient pressure of the rim 11-111 against the periphery of the lens 24.

The screw 16 comprises a smooth portion 19 to facilitate the work of the spring 17.

Small teeth 25 may be provided on the rim 11-111 of the lens 24 to improve anchorage of the lens and to obviate accidental loss.

There is provided on the body 115 a shield 23 able to accommodate the screw 16, spring 17 and protrusion 14, the purpose being to improve functioning, to guide and to protect the mechanism and provide the required good appearance, the shield acting as a guide and container for the head of the screw 16 and the protrusion 14.

By acting on the lens 24 with a finger to produce a resilient reaction on the rims 11-111, the rims are enlarged by an amount enough to enable the lens to be fitted or removed.

The insertion, or fitting, of a new lens 24, even if made of glass, follows the same procedure, but it is necessary to act in the reverse manner.

CLAIMS

1 - Eye-glasses for a quick change of lens, which are suitable for the rapid fitting and replacement of lenses (24) and provide, at the point of attachment of the lateral legs (21), a separation of the lens-holder rim (11-111) and a guided connection between a protrusion (14) of the rim and an anchorage body (15-115) by means of a screw (16), a joint (10) being provided in cooperation with the anchorage body (15-115) so as to clamp the rim (11-111) of the lens (24) resiliently about the lens itself, the resilient clamping action being provided by the thrust of the protrusion (14) towards the anchorage body (15-115), a resilient interspace (13) remaining between the protrusion (14) and the anchorage body (15-115), the eye-glasses being characterized in that the resilient clamping system comprises a removable screw (16) which can adjust the resilient pressure and has a body comprising a smooth segment (19) coinciding at least partially with a spring (17).

2 - Eye-glasses as claimed in Claim 1, in which the smooth portion (19) of the body of the screw (16) has a smaller diameter that the diameter of the threaded portion of the same.

3 - Eye-glasses as claimed in Claim 1 or 2, in which the spring (17) has an inner diameter almost the same as, but greater than, the diameter of the threaded portion of the screw (16).

4 - Eye-glasses as claimed in any claim hereinbefore, in which the anchorage body (115) comprises a guide shield (23).

5 - Eye-glasses as claimed in any claim hereinbefore, in which the lens-holder rims (11-111) comprise retaining teeth (25).

fig.1

fig.2

fig.3

1/1

0246688

**European Patent Office**

# EUROPEAN SEARCH REPORT

EP 87 20 0825

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| D,A | US-A-3 473 869 (W. PLUZNIK)<br>* Column 1; column 2, lines 1-16 * | 1 | G 02 C 1/08 |
| D,A | US-A-3 609 018 (M. MAROLLA)<br>* Abstract; column 2, lines 25-54 * | 1 | |
| D,A | US-A-4 360 252 (C.I. SOLOMON)<br>* Abstract * | 1 | |
| A | US-A-3 902 796 (L.J. PAGE) | | |
| A | FR-A- 953 978 (A. TALOBRE) | | |

TECHNICAL FIELDS SEARCHED (Int Cl 4)

G 02 C 1/08

The present search report has been drawn up for all claims

| Place of search | Date of completion of the search | Examiner |
|---|---|---|
| THE HAGUE | 14-08-1987 | CALLEWAERT-HAEZEBROU |